# EUROPÄISCHE PATENTSCHRIFT

(11) **EP 1 591 316 B1**
(45) Veröffentlichungstag und Bekanntmachung des Hinweises auf die Patenterteilung: **02.01.2013**
(21) Anmeldenummer: 05102539.3
(22) Anmeldetag: 31.03.2005
(51) Int. Cl.: B60R 1/00

(54) **Bildaufnahmesystem**
Imaging system
Système de prise de vue

(30) Priorität: 28.04.2004 DE 102004020682
(43) Veröffentlichungstag der Anmeldung: 02.11.2005
(73) Patentinhaber: ROBERT BOSCH GMBH, 70442 Stuttgart (DE)
(72) Erfinder: Nixdorf, Bernhard, 70469, Stuttgart (DE)

(56) Entgegenhaltungen:
- EP-A- 1 079 611
- EP-A- 1 447 985
- DE-A1- 10 124 005
- DE-A1- 19 741 896
- PATENT ABSTRACTS OF JAPAN Bd. 016, Nr. 412 (E-1256), 31. August 1992 (1992-08-31) & JP 04 137988 A (TOSHIBA CORP), 12. Mai 1992 (1992-05-12)
- PATENT ABSTRACTS OF JAPAN Bd. 2000, Nr. 20, 10. Juli 2001 (2001-07-10) & JP 2001 078204 A (SONY CORP), 23. März 2001 (2001-03-23)

## Beschreibung

### Stand der Technik

Die Erfindung betrifft ein Bildaufnahmesystem nach dem Oberbegriff des Anspruchs 1.
Zurzeit werden Videoeinrichtungen für bordgestützte Bildaufnahmesysteme projektiert. Diese Bildaufnahmesysteme sollen dem Fahrer eines Fahrzeugs dessen Führung erleichtern und beispielsweise die Erkennung von Verkehrszeichen auch bei schlechten Sichtbedingungen erleichtern. Auch soll eine bessere Überwachung des rückwärtigen Verkehrsraums bei einem Rücksetzvorgang des Fahrzeugs, zum Beispiel beim Einparken und dergleichen, erleichtert werden. Neben Kameras für schwarz-weiße Aufnahmen werden bevorzugt auch Farbkameras eingesetzt, da durch die zusätzliche Farbinformation ein genaueres Bild des Verkehrsraums gewonnen werden kann. Ein wesentliches Problem bei der Aufnahme von Farbbildern ist die Ausleuchtung des Aufnahmebereichs mit nicht rein weißem Licht. Während ein Mensch aufgrund seiner Erfahrung in gewissen Grenzen die tatsächliche Farbe eines Gegenstands auch bei Beleuchtung mit einer Quelle von Kunstlicht bestimmen kann, führt die Beleuchtung mit Kunstlicht bei einer Farbkamera zu einem Farbstich. Die von der Farbkamera aufgenommene Farbe des Objekts weicht somit von seiner natürlichen Farbe ab. Im Bereich der sogenannten Consumerelektronik gibt es bereits Verfahren, bei denen mit Hilfe verschiedener Modellvorstellungen aus dem Videobild die Lichtfärbung bestimmt und eine Korrektur vorgenommen wird (sogenannter "Weißabgleich"). Diese Verfahren bestimmen im Allgemeinen die Korrekturparameter allein auf Basis des Videobildes. Hierzu müssen Annahmen über den Inhalt des Bildes gemacht werden. Dieses Verfahren hat den Nachteil, dass die Korrektur nur auf der Basis von Informationen aus dem gleichen Bild erfolgt, was zum Beispiel bei der Grossaufnahme einer gefärbten Fläche zu Fehlern bei der Korrektur führt, da keine unabhängigen Informationen über die Farbe der Beleuchtung und die Farbe der Objekte in dem Aufnahmebereich zur Vefügung stehen. Bei bordgestützten vorausschauenden Videosystemen im Kraftfahrzeugbereich tritt eine Verfärbung des Aufnahmebereichs und damit der von diesem Aufnahmebereich gewonnenen Bilder zum Beispiel bei Nachtfahrten und Tunnelfahrten auf. In der Regel werden für die Straßenbeleuchtung nämlich Natriumdampflampen eingesetzt, die zu einem starken Farbstich führen. Bei rückwärts schauenden Videosystemen wird das Bild bei Nacht zusätzlich durch die Lichtquellen des eigenen Fahrzeugs, wie insbesondere Rückleuchte, Bremsleuchte, Blinker, Rückfahrscheinwerfer, stark beeinflusst.

Aus der JP 04137988 A ist ein fahrzeuggebundenes Bildaufnahmesystem bekannt, das eine Kamera und Steuermittel für den Weißabgleich der Kamera aufweist. Dabei wird der Weißabgleich in Abhängigkeit der Fahrzeuggeschwindigkeit gesteuert.

### Vorteile der Ereindung

Die vorliegende Erfindung geht von der Erkenntnis aus, dass mit der Farbkamera eines bordgestützten Bildaufnahmesystems unter allen Beleuchtungsbedingungen besonders farbtreue Aufnahmen gewonnen werden können, wenn Steuermittel vorgesehen sind, die den Weißabgleich der Farbkamera in Abhängigkeit von Betriebskenngrößen des Fahrzeugs und von Umgebungsbedingungen des Fahrzeugumfelds steuern. Zweckmäßig nutzen die Steuermittel dabei Signale von Sensoren, die Betriebskenngrößen des Fahrzeugs, wie beispielsweise Schaltlagen von Schaltmitteln und/oder Betriebszustände von Leuchtmitteln erfassen. Weiterhin vorteilhaft nutzen die Steuermittel Signale von Sensoren, die die Beleuchtungsstärke in dem Umfeld des Fahrzeugs erfassen.

Besonders vorteilhaft erfolgt die Steuerung des Weißabgleichs der Farbkamera entsprechend Modellen der Fahrzeugbeleuchtung und/oder der Umgebungsbeleuchtung, die in Speichermitteln gespeichert sind.

Vorteilhafte und zweckmäßige Ausgestaltungen und Weiterbildungen der Erfindung sind in den Unteransprüchen gekennzeichnet.

Die Erfindung ermöglicht die Verwendung von Fahrzeugdaten und Umfelddaten, deren Ursprung nicht in dem von der Farbkamera erfassten Videobild liegt, für die Farbkorrektur, insbesondere den Weißabgleich des Videobildes einer bordgestützten Farbkamera. Dadurch kann ein Farbbild für die Wiedergabe oder weitere Verarbeitung bereitgestellt werden, das frei von Farbveränderungen ist, die durch die fahrzeugeigene Beleuchtung und/oder die Umgebungsbeleuchtung hervorgerufen werden. Bei bildgebenden Systemen wird somit dem Fahrer des Fahrzeugs ein wirklichkeitsgetreues Abbild der Fahrzeugumgebung dargestellt. Bei bildverarbeitenden Systemen für die Erkennung von Verkehrszeichen und Lichtsignalen stehen mit der erfindungsgemäßen Lösung Farbbilddaten zur Verfügung, bei denen die Farben eine geringe Abweichung gegenüber den natürlichen Farben aufweisen. Damit können die Toleranzgrenzen in den nachfolgenden Detektions- und Klassifikationsalgorithmen deutlich enger gewählt werden, was zu einer geringeren Wahrscheinlichkeit von Fehlklassifikationen führt.

### Zeichnungen

Die Erfindung wird nachstehend anhand der in der Zeichnung dargestellten Ausführungsbeispiele erläutert.
Es zeigen
- Figur 1: ein Blockschaltbild eines Bildaufnahmesystems,
- Figur 2: das Modell eines Verkehrsraums und ein Fahrzeug mit einem Bildaufnahmesystem.

### Beschreibung der Ausführungsbeispiele

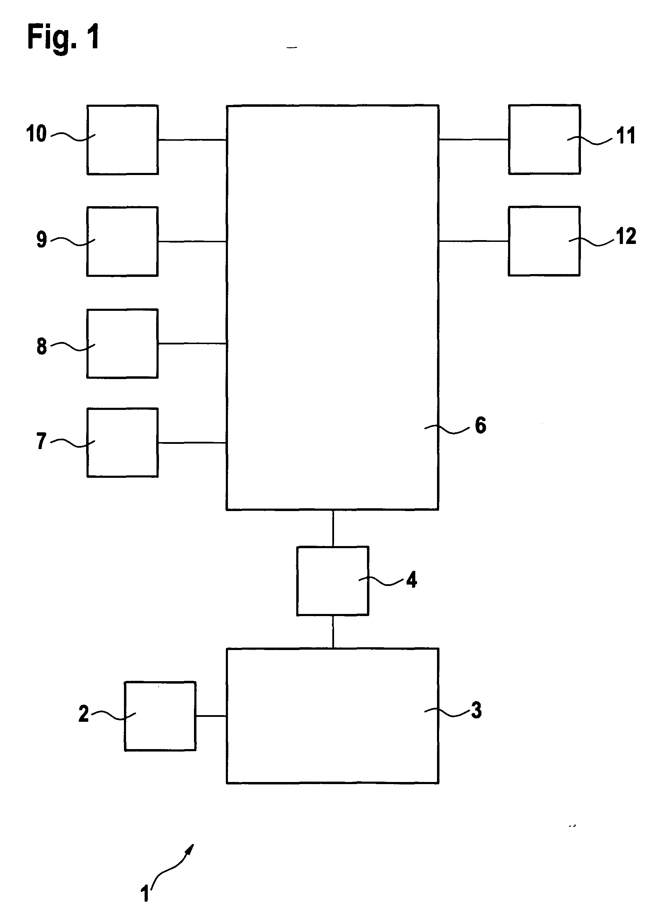

Figur 1 zeigt das Blockschaltbild eines bordgestützten Bildaufnahmesystems 1, das beispielsweise an Bord eines nicht dargestellten Fahrzeugs, insbesondere eines Kraftfahrzeugs, angeordnet ist. Das Bildaufnahmesystem 1 umfasst eine Kamera 2 mit einem Bildsensor für Farbaufnahmen. Mit der Kamera 2 ist ein Funktionsmodul 3 für die Bildbearbeitung der von der Kamera 2 aufgenommenen Bilder verbunden. Das Funktionsmodul 3 umfasst ein Funktionsmodul 4 für den Weißabgleich der von der Kamera 2 aufgenommenen Bilder. Mit dem Funktionsmodul 4 ist ein Funktionsmodul 6 verbunden, das das Funktionsmodul 4 steuert. Das Funktionsmodul 6 ermittelt Korrekturparameter für die Steuerung des Funktionsmoduls 4. Mit dem Funktionsmodul 6 sind weitere Funktionsmodule 7,8,9,10,11,12 verbunden. Das Funktionsmodul 7 ist mit dem an Bord befindlichen Navigationssystem verbunden und leitet Daten dieses Navigationssystems an das Funktionsmodul 6 weiter. Das Funktionsmodul 8 ist mit Sensoren des Fahrzeugs verbunden und leitet Signale dieser Sensoren an das Funktionsmodul 6 weiter. Das Funktionsmodul 9 ist mit Aktoren des Fahrzeugs verbunden und leitet Stellsignale dieser Aktoren an das Funktionsmodul 6 weiter. Für die Erfindung sind insbesondere Stellsignale des Lichtschalters, der Blinkgeber, der Bremse und des Rückwärtsgangs von Bedeutung. Das Funktionsmodul 10 umfasst Speichermittel, in denen fahrzeugspezifische Daten gespeichert sind, die für die Beleuchtung des Fahrzeugs relevant sind. Beispielsweise können hier Modelle der Lichtverteilung und der Farbtemperatur gespeichert sein, die sich bei bestimmten Beleuchtungszuständen des Fahrzeugs, wie beispielsweise Fernlicht, Fahrlicht, Abblendlicht, Rückfahrlicht ergeben.
Diese Modelle beschreiben somit auch die Farbtönung des Kamerabildes durch die lokale Beleuchtung. Neben dieser Farbverschiebung können die Modelle zweckmäßig auch die Anordnung der Farbkamera 2, 2A in Bezug auf die Lichtquellen des Fahrzeugs 20 umfassen, also beispielsweise den Abstand und den Winkel einer Rückfahrkamera zu den Bremslichtern oder dem Rückfahrscheinwerfer. Das Funktionsmodul 11 umfasst Speichermittel, in denen Beleuchtungsrelevante Umgebungsdaten gespeichert sind. Beispielsweise können hier von der jeweiligen Tageszeit abhängige Beleuchtungsmodelle gespeichert sein oder auch Modelle, die der Beleuchtungssituation bei einer Tunnelfahrt entsprechen. Das Funktionsmodul 12 ist mit weiteren Sensoren und Signalgebern verbunden, die zusätzliche fahrzeugspezifische und/oder umgebungsspezifische Signale an das Funktionsmodul 6 weiterleiten, die für das Bildaufnahmesystem 1 relevant sein könnten. So kommen beispielsweise Ausgangssignale von Ultraschallsensoren in Betracht, die den Abstand des Fahrzeugs zu Hindernissen angeben und auch eine Tunnelfahrt signalisieren können.

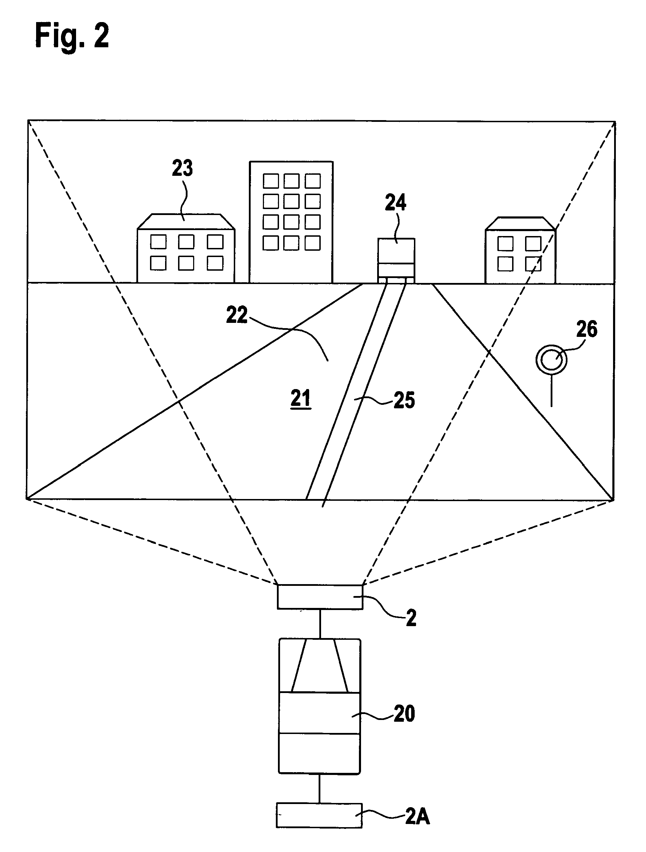

Im Folgenden wird nun die Funktionsweise des Bildaufnahmesystems 1 anhand einiger typischer Fahrsituationen des Fahrzeugs auch unter Bezug auf Figur 2 erläutert. Figur 2 zeigt einen lediglich schematisch dargestellten Verkehrsraum und ein Fahrzeug 20 mit einem Bildaufnahmesystem 1 gemäß Figur 1. Von diesem Bildaufnahmesystem 1 sind in Figur 2 nur die Farbkameras 2, 2A ausdrücklich dargestellt. Der in Figur 2 weiter dargestellte Verkehrsraum ist zugleich der Aufnahmebereich 21 für die aktiv geschaltete und vorausschauende Farbkamera 2 des Fahrzeugs 20. Der Verkehrsraum umfasst eine Fahrbahn 22 mit Fahrbahnmarkierungen 25. In dem Hintergrund des Aufnahmebereichs 21 sind Gebäude 23 und ein fremdes Fahrzeug 24 erkennbar. Am rechten Rand der Fahrbahn 22 ist ein Verkehrszeichen 26 aufgestellt, das von der Farbkamera 2 erfasst wird.

In einer ersten Fallgestaltung werde angenommen, dass sich das Fahrzeug 20 bei Tageslicht fortbewegt. Dieser Fahrzustand wird dem Funktionsmodul 6 in der einfachsten Ausführungsvariante der Erfindung durch die Schaltlage des Lichtschalters vermittelt, der sich bei Tageslicht üblicherweise in Aus-Stellung befindet. Da jedoch aus Sicherheitsgründen empfohlen wird, auch bei Tageslicht das Fahrlicht einzuschalten und dies in einigen europäischen Staaten bereits als Standard eingeführt ist, wird zweckmäßig ein zusätzlicher Sensor vorgesehen. Dieser stellt, beispielsweise durch Messung der Beleuchtungsstärke, fest, ob sich das Fahrzeug 20 unter Tageslichtbedingungen, in der Dämmerung oder zur Nachtzeit fortbewegt. Die Ausgangssignale dieses Sensors werden dem Funktionsmodul 6 zugeleitet. Falls die Standardeinstellung der Farbkamera 2 so gewählt ist, dass der Weißabgleich der Farbkamera 2 für Tageslicht optimiert ist, findet bei einer Fahrt unter Tageslichtbedingungen keine Beeinflussung des Funktionsmoduls 4 durch das Funktionsmodul 6 statt.

Bei der nächsten Fallgestaltung werde angenommen, dass sich das Fahrzeug 20 bei Nacht fortbewegt. Dieser Fahrzustand wird dem Funktionsmodul wiederum über die Stellung des Lichtschalters und/oder über einen zusätzlichen Sensor vermittelt, der beispielsweise die Beleuchtungsstärke in dem Umfeld des Fahrzeugs 20 misst und dabei beispielsweise auch das Licht der Fahrzeugleuchten des Fahrzeugs 20 erfasst. Um die Farbtreue der von der Farbkamera 2 unter diesen Beleuchtungsbedingungen gemachten Aufnahmen zu verbessern, steuert das Funktionsmodul 6 das für den Weißabgleich der Farbkamera 2 zuständige Funktionsmodul 4 entsprechend. Auf vorteilhafte Weise kann das Funktionsmodul dabei zusätzlich auf in den Funktionsmodulen 10 und 11 gespeicherte Modelle der Fahrzeugbeleuchtung des Fahrzeugs 20 einerseits und der Umgebungsbeleuchtung andererseits zugreifen. Diese Modelle können beispielsweise, als funktionale Abhängigkeit oder nach Art von Kennfeldern gestaltet, Korrekturwerte des Weißabgleichs in Abhängigkeit von Betriebszuständen des Fahrzeugs 20 und/oder von der Art der Umgebungsbeleuchtung umfassen. Durch eine zweckentsprechende Korrektur des Weißabgleichs der Farbkamera 2 kann so eine zuverlässigere Erfassung der natürlichen Farben in dem Aufnahmebereich 21 der Farbkamera 2 sichergestellt werden. Auf diese Weise wird die Erkennung von farbigen Fahrbahnmarkierungen 25 oder Verkehrszeichen 26 wesentlich verbessert.

Die Erkennung von Umgebungslichtbedingungen kann noch wesentlich dadurch verbessert werden, dass Sensoren vorgesehen sind, deren Empfindlichkeitscharakteristik an das Emissionsspektrum von Lichtquellen angepasst ist, die üblicherweise für die Beleuchtung von Verkehrsräumen vorgesehen sind, beispielsweise Natriumdampflampen.

In einer weiteren Fallgestaltung kann das Befahren eines Straßentunnels zu einer beliebigen Tages- oder Nachtzeit betrachtet werden. Die Einfahrt oder Ausfahrt aus einem Straßentunnel wird dem Funktionsmodul 6 zweckmäßig durch Daten eines bordeigenen Navigationssystems signalisiert. Vorteilhaft werden diese Daten durch Sensorsignale, beispielsweise Signale von Ultraschallsensoren plausibilisiert, die die Befahrung eines Tunnels durch Abstandsmessung erfassen. Bei Einfahrt in den in der Regel künstlich beleuchteten Tunnel, steuert das Funktionsmodul 6 das Funktionsmodul 4 entsprechend, um den Weißabgleich der Farbkamera 2 optimal an die in dem Tunnel vorherrschende Beleuchtung anzupassen. Nach Passieren des Tunnels erfolgt entsprechend eine Anpassung des Weißabgleichs der Farbkamera 2 an die außerhalb des Tunnels vorliegenden Lichtverhältnisse.

In einer weiteren Fallgestaltung wird eine Rückwärtsfahrt des Fahrzeugs 20 betrachtet, beispielsweise in Zusammenhang mit einem Einparkvorgang. In diesem Fall wird zweckmäßig die rückschauende Farbkamera 2A des Fahrzeugs 20 aktiv geschaltet während die vorausschauende Farbkamera 2 ausgeschaltet werden kann. Für die Steuerung des Funktionsmoduls 4 zur Optimierung des Weißabgleichs der Farbkamera 2A kann das Funktionsmodul 6 wiederum auf die in den Funktionsmodulen 10 und 11 gespeicherten Modelle der Fahrzeug- und Umgebungsbeleuchtung zurückgreifen. Bei dem Modell der Fahrzeugbeleuchtung wird dabei zweckmäßig berücksichtigt, dass ggf. ein Rückfahrscheinwerfer eingeschaltet ist, dass die Bremslichter infolge Betätigung des Bremspedals aufleuchten, und dass ggf., tageszeitabhängig, die Rückleuchten des Fahrzeugs 20 eingeschaltet sind. Da die Beleuchtung des Fahrzeugumfelds auch stark von ggf. reflektiertem Licht abhängt, können zusätzlich auch noch Signale von Abstandsensoren berücksichtigt werden, die beispielsweise die Annäherung an ein Hindernis, wie eine Mauer, Hauswand, oder dergleichen signalisieren.

Besonders zweckmäßig erfolgt die Ermittlung der Korrekturparameter und die entsprechende Steuerung des Weißabgleichs der Farbkamera 2, 2A zyklisch und in kurzen Abständen, da sich die Beleuchtungssituation während einer Fahrt schlagartig ändern kann. Vorteilhaft kann daher auch die Steuerung des Weißabgleichs von der Geschwindigkeit des Fahrzeugs 20 abhängig gemacht werden. Bei einer höheren Geschwindigkeit erfolgt die Anpassung in kürzeren Abständen als bei niedriger Geschwindigkeit.

Je nach Anwendungsfall kann es sich als besonders vorteilhaft erweisen, die Farbkorrektur nicht global für das ganze Bild sondern pixelweise oder für eine Gruppe ausgewählter Pixel vorzunehmen.

## Patentansprüche

1. Fahrzeuggebundenes Bildaufnahmesystem mit einer einen farbempfindlichen Bildsensor umfassenden Farbkamera (2,2A) und mit Steuermitteln für den Weißabgleich der Farbkamera (2,2A), **dadurch gekennzeichnet, dass** der Weißabgleich der Farbkamera (2,2A) in Abhängigkeit von Betriebskenngrößen des Fahrzeugs (20) und Umgebungsbedingungen des Fahrzeugsumfelds des Fahrzeugs (20) gesteuert wird.

2. Bildaufnahmesystem nach Anspruch 1, **dadurch gekennzeichnet, dass** das Bildaufnahmesystem (1) Sensoren umfasst, die Betriebskenngrößen des Fahrzeugs (20) erfassen, wobei die Signale der Sensoren den Steuermitteln (Funktionsmodule 4,6) für den Weißabgleich der Farbkamera (2,2A) zuführbar sind.

3. Bildaufnahmesystem nach einem der vorhergehenden Ansprüche, **dadurch gekennzeichnet, dass** Sensormittel für die Erfassung der Schaltlagen von Schaltmitteln des Fahrzeugs (20) vorgesehen sind.

4. Bildaufnahmesystem nach einem der vorhergehenden Ansprüche, **dadurch gekennzeichnet, dass** Sensormittel für die Erfassung des Betriebszustands von Leuchtmitteln des Fahrzeugs (20) vorgesehen sind.

5. Bildaufnahmesystem nach einem der vorhergehenden Ansprüche, **dadurch gekennzeichnet, dass** das Bildaufnahmesystem (1) Sensoren umfasst, die Umgebungsbedingungen des Fahrzeugumfelds des Fahrzeugs (20) erfassen, wobei die Signale der Sensoren den Steuermitteln (Funktionsmodule 4,6) für den Weißabgleich der Farbkamera (2,2A) zuführbar sind.

6. Bildaufnahmesystem nach einem der vorhergehenden Ansprüche, **dadurch gekennzeichnet, dass** Sensoren für die Erfassung der Beleuchtungsstärke in dem Fahrzeugumfeld vorgesehen sind.

7. Bildaufnahmesystem nach einem der vorhergehenden Ansprüche, **dadurch gekennzeichnet, dass** Sensoren für die Erfassung künstlicher Lichtquellen vorgesehen sind.

8. Bildaufnahmesystem nach einem der vorhergehenden Ansprüche, **dadurch gekennzeichnet, dass** Sensoren für die Erfassung von Tages- und Nachtzeit vorgesehen sind.

9. Bildaufnahmesystem nach einem der vorhergehenden Ansprüche, **dadurch gekennzeichnet, dass** Speichermittel vorgesehen sind, in denen Modelle der Fahrzeugbeleuchtung gespeichert sind.

10. Bildaufnahmesystem nach einem der vorhergehenden Ansprüche, **dadurch gekennzeichnet, dass** Speichermittel vorgesehen sind, in denen Modelle der Umgebungsbeleuchtung gespeichert sind.

11. Bildaufnahmesystem nach einem der vorhergehenden Ansprüche, **dadurch gekennzeichnet, dass** die Modelle der Fahrzeugbeleuchtung und Umgebungsbeleuchtung Korrekturwerte für den Weißabgleich der Farbkamera (2, 2A) in Abhängigkeit von der Beleuchtungssituation umfassen.

12. Bildaufnahmesystem nach einem der vorhergehenden Ansprüche, **dadurch gekennzeichnet, dass** eine Steuerung des Weißabgleichs der Farbkamera (2,2A) geschwindigkeitsabhängig durchführbar ist.

## Claims

1. Vehicle-based imaging system with a colour camera (2, 2A) comprising a colour-sensitive image sensor, and having control means for the white balance of the colour camera (2, 2A), **characterized in that** the white balance of the colour camera (2, 2A) is controlled as a function of operating characteristics of the vehicle (20) and of environmental conditions of the vehicle surroundings of the vehicle (20).

2. Imaging system according to Claim 1, **characterized in that** the imaging system (1) comprises sensors which acquire operating characteristics of the vehicle (20), it being possible to feed the signals of the sensors to the control means (function modules 4, 6) for the white balance of the colour camera (2, 2A).

3. Imaging system according to one of the preceding claims, **characterized in that** sensor means are provided for sensing the switching positions of switching means of the vehicle (20).

4. Imaging system according to one of the preceding claims, **characterized in that** sensor means are provided for sensing the operating state of lights of the vehicle (20).

5. Imaging system according to one of the preceding claims, **characterized in that** the imaging system (1) comprises sensors which acquire environmental conditions of the vehicle surroundings of the vehicle (20), it being possible to feed the signals of the sensors to the control means (function modules 4, 6) for the white balance of the colour camera (2, 2A).

6. Imaging system according to one of the preceding claims, **characterized in that** sensors are provided for sensing the luminance in the vehicle surroundings.

7. Imaging system according to one of the preceding claims, **characterized in that** sensors are provided for sensing artificial light sources.

8. Imaging system according to one of the preceding claims, **characterized in that** sensors are provided for sensing daytime and night time.

9. Imaging system according to one of the preceding claims, **characterized in that** storage means are provided in which models of the vehicle lighting are stored.

10. Imaging system according to one of the preceding claims, **characterized in that** storage means are provided in which models of the ambient illumination are stored.

11. Imaging system according to one of the preceding claims, **characterized in that** the models of the vehicle lighting and ambient illumination comprise correction values for the white balance of the colour camera (2, 2A) as a function of the illumination situation.

12. Imaging system according to one of the preceding claims, **characterized in that** a control of the white balance of the colour camera (2, 2A) can be carried out as a function of speed.

## Revendications

1. Système de saisie d'image intégré à un véhicule et présentant une caméra couleur (2, 2A) dotée d'un détecteur d'image sensible aux couleurs et de moyens de commande de l'équilibrage des blancs de la caméra couleur (2, 2A),
**caractérisé en ce que**
l'équilibrage des blancs de la caméra couleur (2, 2A) est commandé en fonction de grandeurs caractéristiques de fonctionnement du véhicule (20) et des conditions de l'environnement du véhicule (20).

2. Système de saisie d'image selon la revendication 1, **caractérisé en ce que** le système (1) de saisie d'image comporte des détecteurs qui saisissent les grandeurs caractéristiques du fonctionnement du véhicule (20), les signaux des détecteurs pouvant être apportés aux moyens de commande (modules fonctionnels 4, 6) pour l'équilibrage des blancs de la caméra couleur (2, 2A).

3. Système de saisie d'image selon l'une des revendications précédentes, **caractérisé en ce que** des moyens de détection permettant de déterminer la position de commutation de moyens de commutation du véhicule (20) sont prévus.

4. Système de saisie d'image selon l'une des revendications précédentes, **caractérisé en ce que** des moyens de détection permettant la saisie de l'état de fonctionnement des moyens d'éclairage du véhicule (20) sont prévus.

5. Système de saisie d'image selon l'une des revendications précédentes, **caractérisé en ce que** le système (1) de saisie d'image comporte des détecteurs qui saisissent les conditions de l'environnement du véhicule (20), les signaux des détecteurs pouvant être apportés aux moyens de commande (modules fonctionnels 4, 6) pour l'équilibrage des blancs de la caméra couleur (2, 2A).

6. Système de saisie d'image selon l'une des revendications précédentes, **caractérisé en ce que** des détecteurs qui saisissent l'intensité de l'éclairage de l'environnement du véhicule sont prévus.

7. Système de saisie d'image selon l'une des revendications précédentes, **caractérisé en ce que** des détecteurs qui saisissent des sources artificielles de lumière sont prévues.

8. Système de saisie d'image selon l'une des revendications précédentes, **caractérisé en ce que** des détecteurs qui détectent le jour et la nuit sont prévus.

9. Système de saisie d'image selon l'une des revendications précédentes, **caractérisé en ce que** des moyens de mémoire dans lesquels des modèles de l'éclairage du véhicule sont conservés sont prévus.

10. Système de saisie d'image selon l'une des revendications précédentes, **caractérisé en ce que** des moyens de mémoire dans lesquels des modèles de l'éclairage de l'environnement sont conservés sont prévus.

11. Système de saisie d'image selon l'une des revendications précédentes, **caractérisé en ce que** les modèles de l'éclairage du véhicule et de l'éclairage de l'environnement comportent des valeurs de correction pour l'équilibrage des blancs de la caméra couleur (2, 2A) en fonction de la situation de l'éclairage.

12. Système de saisie d'image selon l'une des revendications précédentes, **caractérisé en ce qu'**une commande de l'équilibrage des blancs dans la caméra couleur (2, 2A) peut être réalisée en fonction de la vitesse.
